# EUROPÄISCHE PATENTSCHRIFT

(11) **EP 2 818 436 B1**
(45) Veröffentlichungstag und Bekanntmachung des Hinweises auf die Patenterteilung: **02.03.2016**
(21) Anmeldenummer: 14002173.4
(22) Anmeldetag: 25.06.2014
(51) Int. Cl.: B65G 47/14, B65G 47/30, B65G 47/57, B65G 47/31

(54) **Vorrichtung zum Vereinzeln von Stückgutteilen**
Device for separating piece goods
Dispositif de séparation d'objets

(30) Priorität: 27.06.2013 DE 202013005786 U
(43) Veröffentlichungstag der Anmeldung: 31.12.2014
(73) Patentinhaber: BEUMER GmbH & Co. KG, 59269 Beckum (DE)
(72) Erfinder: Heiplatz, Heino, 48317 Drensteinfurt (DE)
(74) Vertreter: Philipp, Matthias

(56) Entgegenhaltungen:
- WO-A1-98/33729
- US-A- 2 956 665

## Beschreibung

Die Erfindung betrifft eine Vorrichtung zum Vereinzeln von Stückgutteilen nach dem Oberbegriff des Anspruchs 1. Eine solche Vorrichtung ist z.B. aus der WO 98/33729 A1 bekannt.

Es sind zahlreiche Vorrichtungen bekannt, um Stückgutteile zu vereinzeln, beispielweise in Form von mehreren aufeinanderfolgenden Förderern, etwa gemäß WO2011/112449 A2, EP 1 345 822 B1 oder EP 1 854 749 B1, die relativ viel Platz einnehmen.

Die Aufgabe der Erfindung besteht darin, eine konstruktiv einfach aufgebaute und platzsparende Vorrichtung zum Vereinzeln von Stückgutteilen bereitzustellen.

Diese Aufgabe wird durch die Vorrichtung nach Anspruch 1 gelöst.

Die Leitfläche kann in Zuführrichtung verlaufen, oder schräg zur Zuführrichtung unter einem Stauwinkel von bis zu 5°, 10° oder 15°.

Die erste Förderoberfläche kann unter einem Querneigungswinkel von mindestens 10° angeordnet sein, beispielsweise mindestens 15°, 20°, 25°, 30°, 35°, 40° oder 45°.

Mit einer derartigen Vorrichtung besteht die Möglichkeit, mit der ersten Fördereinrichtung zugeführte Stückgutteile, die nebeneinander und in mehreren Ebenen übereinander in Form einer ungeordneten haufenförmigen Anordnung (3D-Bulk) angeliefert werden, überwiegend oder insgesamt dahingehend umzuordnen, dass eine Anordnung der Stückgutteile nebeneinander gebildet wird, ohne dass einzelne Stückgutteile übereinander liegen (2D-Bulk). Die Leiteinrichtung dient dabei aufgrund der in Zuführrichtung abnehmenden Höhe der Leitfläche als Führungselement, gegen das sich die zugeführten Stückgutteile stauen, wobei übereinander liegende Stückgutteile während ihrer Bewegung entlang der Leitfläche durch die nachfolgenden Stückgutteile und die Schwerkraft nach und nach voneinander abrutschen und in einer Anordnung nebeneinander auf die zweite Fördereinrichtung gelangen.

Die Leiteinrichtung kann in Zuführrichtung gesehen keilförmig ausgebildet sein, wobei die Höhe, mit der sie über die erste Förderoberfläche vorsteht, in Zuführrichtung gesehen kontinuierlich abnehmen kann, bis die Leiteinrichtung bündig mit der ersten Förderoberfläche abschließt.

Die erste Förderoberfläche kann in Zuführrichtung gesehen horizontal verlaufen oder unter einem Längsneigungswinkel ansteigend geneigt angeordnet sein, beispielsweise unter bis zu 5°, 10°, 15°, 20° oder 30° bezüglich einer Horizontalebene.

Die zweite Förderoberfläche kann quer zu ihrer Längsrichtung gesehen horizontal angeordnet sein. In Längsrichtung gesehen kann die zweite Förderoberfläche horizontal, leicht ansteigend oder leicht abfallend geneigt angeordnet sein, beispielsweise unter bis zu 5°, 10°, 15° oder 20° ansteigend oder abfallend geneigt.

Die Leitfläche kann mit der ersten Förderoberfläche einen Winkel zwischen 90° und 120° bilden, damit einerseits sichergestellt ist, dass die Leitfläche noch als Staufläche für ankommende Stückgutteile wirken kann, und andererseits ein Abgleiten von Stückgutteilen, die auf anderen Stückgutteilen liegen, über die Leiteinrichtung hinweg begünstigt ist.

Obwohl bevorzugt vorgesehen ist, dass die Leitfläche eine ebene Fläche ist, besteht die Möglichkeit, dass die Leitfläche eine Krümmung aufweist, wobei ein örtlicher Winkel, unter dem die Leitfläche bezüglich einer Ebene, in der sich die erste Förderoberfläche erstreckt, geneigt ist, mit zunehmender Höhe der Leitfläche bezüglich der ersten Förderoberfläche zunehmen kann (in Richtung der ersten Förderoberfläche gesehen, konvexe Formgebung) oder abnehmen kann (in Richtung der ersten Förderoberfläche gesehen, konkave Formgebung), um die Leit- oder Stauwirkung der Leitfläche insgesamt oder bereichsweise gezielt zu beeinflussen.

Die erste Fördereinrichtung kann ein Gurt- oder Rollenförderer sein. Es besteht die Möglichkeit, dass die erste Fördereinrichtung als Förderband oder Modulband mit eingebetteten Rollen ausgebildet ist, wobei die Rollen als passive, nicht angetriebene Rollen mit einer Drehachse in Zuführrichtung ausgestattet sind. Dadurch besteht ein hoher Reibwert in Zuführrichtung, beispielsweise bei gummierten Rollen, und ein geringer Reibwert quer zur Zuführrichtung, so dass eine Übergabe der Stückgutteile vom Übergabebereich auf den Übernahmebereich erleichtert ist.

Die zweite Fördereinrichtung kann im einfachsten Fall wie oben zur ersten Fördereinrichtung ausgeführt ausgebildet sein, ist jedoch bevorzugt ein Gurt- oder Rollenförderer, wobei bevorzugt vorgesehen ist, dass die zweite Fördereinrichtung als Förderband oder Modulband mit eingebetteten Rollen ausgeführt ist, insbesondere wie in der WO2006/121750 A1 beschrieben ist (Technologie mit selektiv aktivierbaren Rollen).

Wenn die erste und die zweite Fördereinrichtung ein Förderband oder einen Fördergurt aufweist, stimmen die Zuführrichtung und eine Abförderrichtung mit der Bewegungsrichtung des jeweiligen Förderbands oder Fördergurts und dessen Längsrichtung überein. Zumindest im Übergabebereich der ersten Fördereinrichtung und im Übernahmebereich der zweiten Fördereinrichtung weisen die Stückgutteile eine Bewegungskomponente quer zur Zuführ- oder Abförderrichtung auf, was durch die Anordnung passiver oder aktiver Rollen unterstützt werden kann.

Die Erfindung wird nachfolgend anhand eines Ausführungsbeispiels erläutert, wobei auf eine Zeichnung Bezug genommen wird, in der
Fig. 1 eine perspektivische Ansicht einer erfindungsgemäßen Vorrichtung zum Vereinzeln von Stückgutteilen zeigt, wobei eine erste Fördereinrichtung in einem Übergabebereich und eine zweite Fördereinrichtung in einem Übernahmebereich dargestellt ist,
Fig. 2 die Vorrichtung nach Fig. 1 aus einer anderen Blickrichtung zeigt,
Fig. 3 eine Draufsicht der Vorrichtung nach Fig. 1 und 2 zeigt,
Fig. 4 eine Schnittansicht gemäß Fig. 3 A-A zeigt,
Fig. 5 eine Schnittansicht gemäß Fig. 3 B-B zeigt, und
Fig. 6 eine Schnittansicht gemäß Fig. 3 C-C zeigt.

Die dargestellte Vorrichtung zum Vereinzeln von Stückgutteilen umfasst eine erste Fördereinrichtung 2 mit einem Förderband 4, das in einer Zuführrichtung 10 angetrieben ist. Eine erste Förderoberfläche 12 der ersten Fördereinrichtung 2 bzw. des Förderbands 4 ist quer zur Zuführrichtung 10 unter einem Querneigungswinkel 14 bezüglich einer Horizontalebene 20 geneigt angeordnet, damit in Zuführrichtung 10 zugeführte Stückgutteile quer zur Zuführrichtung 10 abgleiten können. Die Größe des Querneigungswinkels 14 hängt unter anderem von den Gleiteigenschaften der zugeführten Stückgutteile ab, da die Vorrichtung darauf beruht, dass übereinander liegende Stückgutteile voneinander abgleiten. Der Querneigungswinkel 14 kann beispielsweise in einem Bereich zwischen 5° und 45° liegen und beträgt bevorzugt zwischen 20° und 35°. Der Winkel 14 kann einstellbar oder auch während des Betriebs der Vorrichtung verstellbar oder an momentane Situationen anpassbar sein.

Weiterhin ist die erste Förderfläche unter einem Längsneigungswinkel 15 in Zuführrichtung 10 gesehen ansteigend angeordnet, beispielsweise mit ca. 5 bis 10° Steigung.

Die erste Fördereinrichtung 2 umfasst einen Zuführbereich 16, in dem die Stückgutteile im Wesentlichen in Zuführrichtung 10 gefördert werden, und einen in Zuführrichtung 10 an den Zuführbereich 16 anschließenden Übergabebereich 18 (schraffiert), in dem die Stückgutteile eine Bewegungskomponente quer zur Zuführrichtung 10 erhalten und von der ersten Fördereinrichtung 2 abgleiten. In dem Zuführbereich 16 kann die erste Förderoberfläche einen anderen Querneigungswinkel haben als in dem Übergabebereich, insbesondere einen kleineren Querneigungswinkel, bis hin zu 0° (ohne Querneigung).

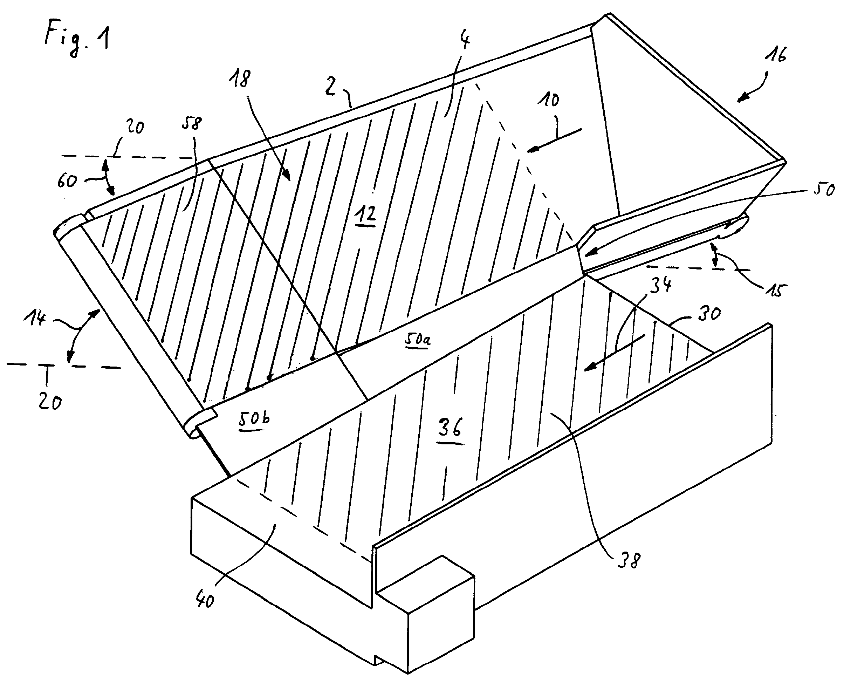

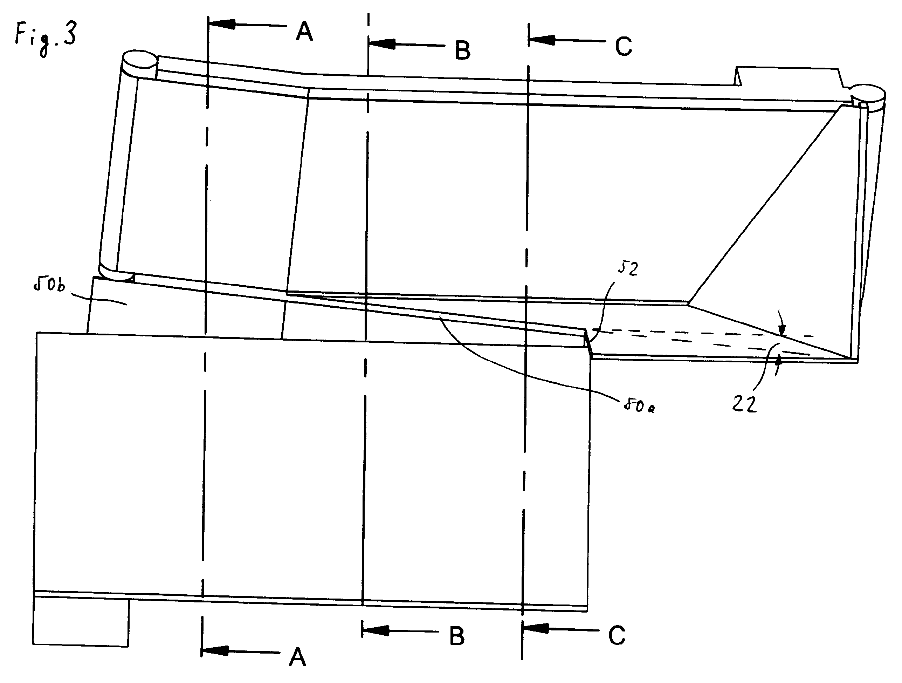

Obwohl die Förderoberfläche 12 der ersten Fördereinrichtung 2 zwischen angedeuteten Antriebs- und Umlenkrollen verlaufen kann, ist eine Variante möglich, die in Fig. 1 und 3 angedeutet ist. Ein Teil der Förderoberfläche 12, eine Förderoberfläche 58, schließt sich mittels eines sogenannten Knickstoßes in Zuführrichtung 10 an einen ersten Teil der Förderoberfläche 12 an und kann als getrenntes Förderband ausgebildet sein. Die Förderoberfläche 58 kann in Zuführrichtung 10 gesehen bezüglich einer Horizontalebene 20 abfallend unter einem Längsneigungswinkel 60 von 5° bis 20° geneigt sein, vorzugsweise unter 10°.

Benachbart zu der ersten Fördereinrichtung 2 ist eine zweite Fördereinrichtung 30 mit einem zweiten Förderband 32 angeordnet, das in einer Abförderrichtung 34 oder Längsrichtung angetrieben ist und eine zweite Förderoberfläche 36 aufweist. Die zweite Fördereinrichtung 30 weist benachbart zu dem Übergabebereich 18 der ersten Fördereinrichtung 2 einen Übernahmebereich 38 (schraffiert) auf, sowie einen sich in Abförderrichtung 34 an den Übernahmebereich 38 anschließenden Abförderbereich 40. Während von der ersten Fördereinrichtung 2 in dem Übernahmebereich 38 zugeführte Stückgutteile eine Bewegungskomponente quer zur Abförderrichtung 34 aufweisen, werden sie im Abförderbereich 40 im Wesentlichen in Abförderrichtung 34 bewegt. Die Abförderrichtung 34 kann parallel zu der Zuführrichtung 10 sein oder einen beliebigen Winkel damit bilden.

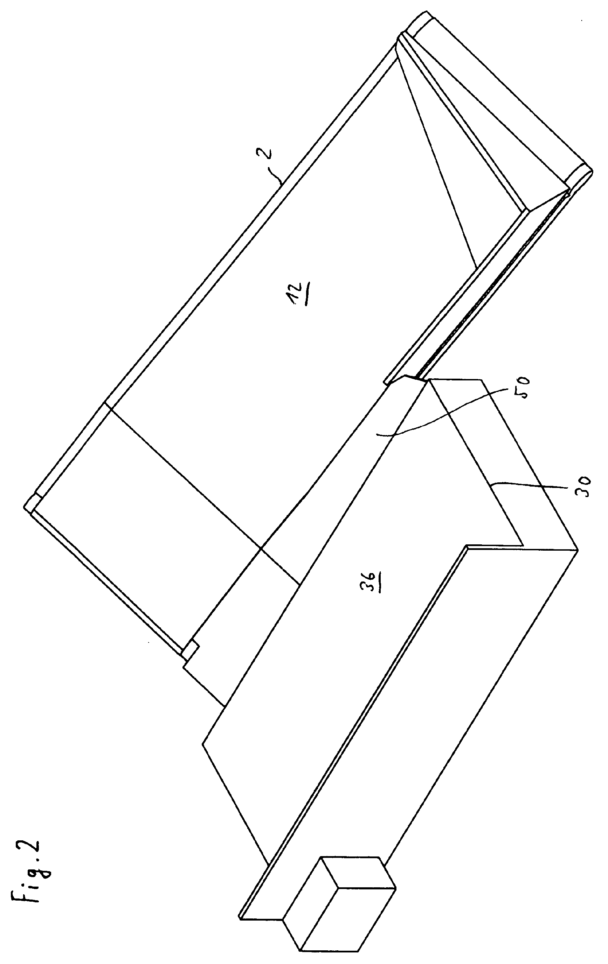

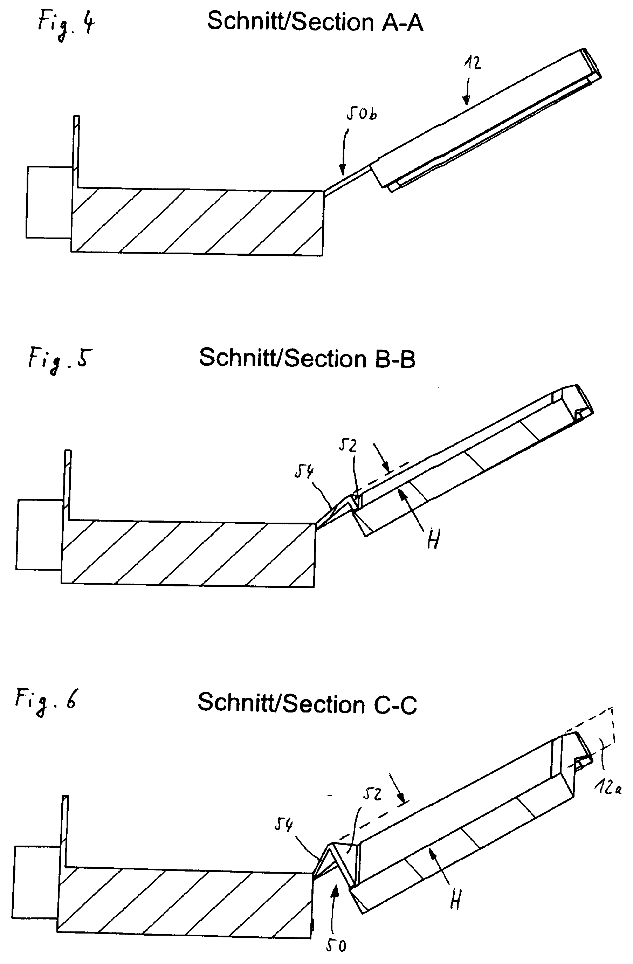

Zwischen dem Übergabebereich 18 der ersten Fördereinrichtung 2 und dem Übernahmebereich 38 der zweiten Fördereinrichtung 30 ist erfindungsgemäß eine Leiteinrichtung 50 angeordnet, die als feststehendes Element mit einer zu der ersten Fördereinrichtung 2 weisenden Leitfläche 52 ausgebildet ist. Wie insbesondere aus den Schnittansichten gemäß Fig. 4, 5 und 6 hervorgeht, ist die Leitfläche 52 beispielhaft senkrecht zu der ersten Förderoberfläche 12 oder deren Erstreckungsebene 12a angeordnet und weist diesbezüglich eine Höhe H auf, die sich entlang des Übergabebereichs 18 in Zuführrichtung 10 gesehen kontinuierlich bis auf Null verringert. Wie Fig. 1 und 2 zeigen, verläuft die Leiteinrichtung 50 in dem dargestellten Beispiel in einem ersten Teilstück 50a wie vorstehend beschrieben, während ein zweites, anschließendes Teilstück 50b der Leiteinrichtung 50 als ebene Übergangsfläche zwischen der ersten Fördereinrichtung 2 und der zweiten Fördereinrichtung 30 ausgebildet ist. Während das zweite Teilstück oder die Übergangsfläche 50b in der dargestellten Ausführung in einer Ebene mit der ersten Förderoberfläche 12 ausgebildet ist, kann in einer Variante vorgesehen sein, dass die Übergangsfläche 50b in Bezug auf die erste Förderoberfläche 12 abgesenkt oder vertieft ausgebildet ist. Die Förderoberfläche 58 kann benachbart zu der Übergangsfläche 50b angeordnet sein.

Die Leitfläche 52 könnte parallel zur Zuführrichtung 10 verlaufen, ist jedoch bevorzugt unter einem Stauwinkel 22 (Fig. 3) von beispielsweise 5° dazu angeordnet, um eine Stauwirkung der gegen die Leiteinrichtung geförderten Stückgutteile zu erreichen.

Die Leitfläche 52 geht in eine zur zweiten Fördereinrichtung geneigte Abgabefläche 54 über, die schräg geneigt zur zweiten Förderoberfläche 36 verläuft. Die Abgabefläche 54 schließt an die Übergangsfläche 50b an.

Wie bereits in der Beschreibungseinleitung ausgeführt ist, handelt es sich bei der ersten Fördereinrichtung 2 um einen Gurtförderer, oder aber bevorzugt um ein als Ganzes in Zuführrichtung bewegtes Förder- oder Modulband mit eingebetteten Rollen. Die eingebetteten Rollen sind bevorzugt nicht angetrieben und weisen eine in Zuführrichtung 10 ausgerichtete Drehachse auf, so dass Stückgutteile in Zuführrichtung 10 gefördert werden können, aber unmittelbar auf der ersten Fördereinrichtung aufliegende Stückgutteile mit sehr geringen (Roll-)Reibwerten quer zur Zuführrichtung in Richtung auf die Leiteinrichtung und die zweite Fördereinrichtung abgleiten können. Die Rollen sind beispielsweise mit Gummi beschichtet und haben einen hohen Reibwert, in Zuführrichtung 10 gesehen.

Die zweite Fördereinrichtung 30 ist bevorzugt als Schrägrollenförderer, beispielsweise in Fischgrätanordnung, ausgebildet, wobei die Rollen unter einem spitzen Winkel zur Förderrichtung angeordnet sind, beispielsweise unter einem Winkel zwischen 10° und 20°. Alternativ besteht die Möglichkeit, die zweite Fördereinrichtung 30 mit selektiv aktivierbaren bzw. antreibbaren Rollen gemäß WO2006/121750 A1 auszuführen. Diese Gestaltung der zweiten Fördereinrichtung 30 dient dazu, Stückgutteile, die über die Leiteinrichtung auf den Übernahmebereich 38 gelangt sind, schnell aus diesem Bereich herauszufördern, um einen Stau von Stückgutteilen im Übernahmebereich 38 zu verhindern, und um insbesondere zu verhindern, dass sich Stückgutteile übereinander legen.

### Bezugszeichenliste

- 2: erste Fördereinrichtung
- 4: erstes Förderband
- 6, 8: Antriebs- und Umlenkrolle
- 10: Zuführrichtung
- 12: erste Förderoberfläche
- 12a: Erstreckungsebene (von 12)
- 14: Querneigungswinkel (von 12)
- 15: Längsneigungswinkel (von 12)
- 16: Zuführbereich
- 18: Übergabebereich
- 20: Horizontalebene
- 22: Stauwinkel
- 30: zweite Fördereinrichtung
- 32: zweites Förderband
- 34: Abförderrichtung (Längsrichtung)
- 36: zweite Förderoberfläche
- 38: Übernahmebereich
- 40: Abförderbereich
- 50: Leiteinrichtung
- 50a: erstes Teilstück
- 50b: zweites Teilstück (Übergangsfläche)
- 52: Leitfläche
- 58: Förderoberfläche
- 60: Längsneigungswinkel (von 58)

- H: Höhe (von 52 bezüglich 12)

## Patentansprüche

1. Vorrichtung zum Vereinzeln von Stückgutteilen, mit einer ersten, in einer Zuführrichtung (10) arbeitenden Fördereinrichtung (2) mit einer ersten Förderoberfläche (12) zum Zuführen von Stückgutteilen, mit einer benachbart zu einem Übergabebereich (18) der ersten Fördereinrichtung (2) angeordneten zweiten Fördereinrichtung (30) mit einer zweiten Förderoberfläche (36) zum Übernehmen der mit der ersten Fördereinrichtung (2) zugeführten Stückgutteile in einem Übernahmebereich (38) und zum Abfördern der Stückgutteile aus dem Übernahmebereich (38), wobei die erste Förderoberfläche (12) in dem Übergabebereich (18) quer zu der Zuführrichtung (10) und in Richtung der zweiten Fördereinrichtung (30) bezüglich einer Horizontalebene (20) unter einem Querneigungswinkel (14) abfallend geneigt ist, mit einer zwischen dem Übergabebereich (18) der ersten Fördereinrichtung (2) und dem Übernahmebereich (38) der zweiten Fördereinrichtung (30) angeordneten Leiteinrichtung (50) zum kontrollierten Überleiten von Stückgutteilen von der ersten zu der zweiten Fördereinrichtung, **dadurch gekennzeichnet, dass** die Leiteinrichtung (50) eine entlang des Übergabebereichs (18) verlaufende Leitfläche (52) aufweist, die mit einer in Zuführrichtung (10) abnehmenden Höhe (H) über eine Erstreckungsebene (12a) der ersten Förderoberfläche (12) vorsteht.

2. Vorrichtung nach Anspruch 1, **dadurch gekennzeichnet, dass** die erste Förderoberfläche (12) in Zuführrichtung (10) gesehen horizontal oder unter einem Längsneigungswinkel (15) bezüglich der Horizontalebene (20) ansteigend geneigt angeordnet ist.

3. Vorrichtung nach Anspruch 1 oder 2, **dadurch gekennzeichnet, dass** die zweite Förderoberfläche (36) quer zu einer Längsrichtung (34) gesehen horizontal angeordnet ist.

4. Vorrichtung nach einem der vorangehenden Ansprüche, **dadurch gekennzeichnet, dass** die zweite Förderoberfläche (36) in einer Längsrichtung (34) gesehen horizontal, ansteigend oder abfallend geneigt angeordnet ist.

5. Vorrichtung nach einem der vorangehenden Ansprüche, **dadurch gekennzeichnet, dass** die Leitfläche (52) mit der ersten Förderoberfläche (12) einen Winkel zwischen 90° und 120° bildet.

6. Vorrichtung nach einem der vorangehenden Ansprüche, **dadurch gekennzeichnet, dass** die Leitfläche (52) eben ist.

7. Vorrichtung nach einem der Ansprüche 1 bis 5, **dadurch gekennzeichnet, dass** die Leitfläche reibungsarm beschichtet oder mit eingebetteten Rollen versehen ist, deren Drehachsen parallel zur Zuführeinrichtung (10) sein können.

8. Vorrichtung nach einem der vorangehenden Ansprüche, **dadurch gekennzeichnet, dass** sich ein an die Leiteinrichtung (50) angrenzender Teil des Übergabebereichs (18) der ersten Förderoberfläche (12) oberhalb der zweiten Förderoberfläche (36) befindet.

9. Vorrichtung nach einem der Ansprüche 1 bis 7 , **dadurch gekennzeichnet, dass** ein an die Übergabefläche (54) angrenzender Teil des Übernahmebereichs (38) der zweiten Förderoberfläche (36) in gleicher Höhe mit der Übergabefläche (18) verläuft.

10. Vorrichtung nach einem der vorangehenden Ansprüche, **dadurch gekennzeichnet, dass** die erste Fördereinrichtung (2) ein Gurt- oder Rollenförderer ist, insbesondere in Form eines Förder- oder Modulbands mit eingebetteten Rollen.

11. Vorrichtung nach Anspruch 10, **dadurch gekennzeichnet, dass** die eingebetteten Rollen als nicht angetriebene Rollen mit einer Drehachse in Zuführrichtung (10) ausgebildet sind.

12. Vorrichtung nach einem der vorangehenden Ansprüche, **dadurch gekennzeichnet, dass** die zweite Fördereinrichtung (30) ein Gurt- oder Rollenförderer ist, der ein Förder- oder Modulband mit eingebetteten Rollen aufweisen kann.

13. Vorrichtung nach Anspruch 12, **dadurch gekennzeichnet, dass** die eingebetteten Rollen selektiv aktivierbar sind.

## Claims

1. Device for separating piece goods, with a first conveyor means (2) working in a delivery direction (10) and having a first conveying surface (12) for delivering piece goods, with a second conveyor means (30) disposed adjacent to a transfer region (18) of the first conveyor means (2) and having a second conveying surface (36) for receiving the piece goods delivered by the first conveyor means (2) in a receiving region (38) and for conveying the piece goods away from the receiving region (38), wherein the first conveying surface (12) slopes downwards at a transverse angle of inclination (14) in the transfer region (18) transversely to the delivery direction (10) and towards the second conveyor means (30) relative to a horizontal plane (20) with a guide means (50) disposed between the transfer region (18) of the first conveyor means (2) and the receiving region (38) of the second conveyor means (30) for the controlled transfer of piece goods from the first to the second conveyor means, **characterized in that** the guide means (50) has a guiding surface (52) running along the transfer region (18), which projects at a height (H) that declines in the delivery direction (10) above an extension plane (12a) of the first conveying surface (12).

2. Device according to claim 1, **characterized in that** the first conveying surface (12) is arranged horizontally, seen in the delivery direction (10), or sloping upwards at a longitudinal angle of inclination (15) relative to the horizontal plane (20).

3. Device according to claim 1 or 2, **characterized in that** the second conveying surface (36) is arranged horizontally seen transversely to a longitudinal direction (34).

4. Device according to any one of the above claims, **characterized in that** the second conveying surface (36) is arranged horizontally, sloping upwards or downwards, seen in a longitudinal direction (34).

5. Device according to any one of the above claims, **characterized in that** the guiding surface (52) forms an angle of between 90° and 120° to the first conveying surface (12).

6. Device according to any one of the above claims, **characterized in that** the guiding surface (52) is level.

7. Device according to any one of claims 1 to 5, **characterized in that** the guiding surface has a low-friction coating or is equipped with embedded rollers, whose axes of rotation can be parallel to the delivery direction (10).

8. Device according to any one of the above claims, **characterized in that** a portion of the transfer region (18) of the first conveying surface (12), adjacent to the guide means (50), is located above the second conveying surface (36).

9. Device according to any one of the claims 1 to 7, **characterized in that** a portion of the receiving region (38) of the second conveying surface (36), adjacent to the discharge surface (54), runs at the same height as the transfer surface (18).

10. Device according to any one of the above claims, **characterized in that** the first conveyor means (2) is a belt- or roller conveyor, particularly in the form of a conveyor- or modular belt with embedded rollers.

11. Device according to claim 10, **characterized in that** the embedded rollers are implemented as non-driven rollers with an axis of rotation in the delivery direction (10).

12. Device according to any one of the above claims, **characterized in that** the second conveyor means (30) is a belt- or roller conveyor, which can have a conveyor- or modular belt with embedded rollers.

13. Device according to claim 12, **characterized in that** the embedded rollers can be activated selectively.

## Revendications

1. Dispositif de séparation de colis isolés, avec un premier moyen transporteur (2) fonctionnant dans une direction de livraison (10) et ayant une première surface de convoyage (12) pour la livraison de colis isolés, avec un second moyen transporteur (30) disposé adjacente à une région de transfert (18) du premier moyen transporteur (2) et ayant une seconde surface de convoyage (36) pour la réception des colis isolés livrés par le premier moyen transporteur (2) dans une région réceptrice (38) et pour transporter les colis isolés à distance de la région réceptrice (38), dans lequel la première surface de convoyage (12) est inclinée vers le bas à un angle de déclivité transversal (14) dans la région de transfert (18) transversalement à la direction de livraison (10) et en direction du second moyen transporteur (30) par rapport à un plan horizontal (20) avec un moyen de guidage (50) disposé entre la région de transfert (18) du premier moyen transporteur (2) et la région réceptrice (38) du second moyen transporteur (30) pour le transfert contrôlé de colis isolés du premier au second moyen transporteur, **caractérisé en ce que** le moyen de guidage (50) présente une surface de guidage (52) située le long de la région de transfert (18), qui fait saillie à une hauteur (H) qui est inclinée dans la direction de livraison (10) au-dessus d'un plan d'extension (12a) de la première surface de convoyage (12).

2. Dispositif selon la revendication 1, **caractérisé en ce que** la première surface de convoyage (12) est disposée horizontalement, vue dans la direction de livraison (10), ou est inclinée vers le haut à un angle de déclivité longitudinal (15) par rapport au plan horizontal (20).

3. Dispositif selon la revendication 1 ou 2, **caractérisé en ce que** la seconde surface de convoyage (36) est disposée horizontalement, vue transversalement à une direction longitudinale (34).

4. Dispositif selon l'une quelconque des revendications précédentes, **caractérisé en ce que** la seconde surface de convoyage (36) est disposée horizontalement, inclinée vers le haut ou vers le bas, vue dans une direction longitudinale (34).

5. Dispositif selon l'une quelconque des revendications précédentes, caractérisé en ce la surface de guidage (52) forme un angle de 90° à 120° par rapport à la première surface de convoyage (12).

6. Dispositif selon l'une quelconque des revendications précédentes, **caractérisé en ce que** la surface de guidage (52) est plane.

7. Dispositif selon l'une des revendications 1 à 5, **caractérisé en ce que** la surface de guidage est couverte d'un enduit à faible coefficient de frottement ou est équipée de rouleaux imbriqués, dont les axes de rotation peuvent être parallèles à la direction de livraison (10).

8. Dispositif selon l'une quelconque des revendications précédentes, **caractérisé en ce qu'**une partie de la région de transfert (18) de la première surface de convoyage (12), adjacente au moyen de guidage (50), est située au-dessus de la seconde surface de convoyage (36).

9. Dispositif selon l'une des revendications 1 à 7, **caractérisé en ce qu'**une partie de la région réceptrice (38) de la seconde surface de convoyage (36), adjacente à la surface de décharge (54), est située à la même hauteur que la surface de transfert (18).

10. Dispositif selon l'une quelconque des revendications précédentes, **caractérisé en ce que** le premier moyen transporteur (2) est un transporteur à bande ou à rouleaux, particulièrement sous la forme d'une bande transporteuse ou d'une bande modulaire avec des rouleaux imbriqués.

11. Dispositif selon la revendication 10, **caractérisé en ce que** les rouleaux imbriqués sont mis en oeuvre en tant que rouleaux non commandés avec un axe de rotation dans la direction de livraison (10).

12. Dispositif selon l'une quelconque des revendications précédentes, **caractérisé en ce que** le second moyen transporteur (30) est un transporteur à bande ou à rouleaux, qui peut avoir une bande transporteuse ou une bande modulaire avec des rouleaux imbriqués.

13. Dispositif selon la revendication 12, **caractérisé en ce que** les rouleaux imbriqués peuvent être activés sélectivement.
